# DEMANDE DE BREVET EUROPEEN

(11) **EP 4 703 194 A1**
(43) Date de publication de la demande: **04.03.2026**
(21) Numéro de dépôt: 25196809.5
(22) Date de dépôt: 19.08.2025
(51) Int. Cl.: B60N 2/015, B60N 2/30, B60R 15/02, B62D 33/06

(54) **CAMION ROUTIER COMPRENANT UNE DOUCHE**

(30) Priorité: 30.08.2024 FR 2409280
(71) Demandeur: Lefebvre, François, 49120 Chemillé-en-Anjou (FR); Boudaud, Philippe, 49340 Trémentines (FR)
(72) Inventeur: LEFEBVRE, François, 49120 Chemillé-en-Anjou (FR); BOUDAUD, Philippe, 49340 Trémentines (FR)
(74) Mandataire: Lequien, Philippe

(57) **Abrégé**

Camion routier (1) comprenant une cabine (11), la cabine (11) ayant :
- un plancher (111) ;
- un siège conducteur (112) situé d'un côté de la cabine (11) ;
- un emplacement passager (113) situé d'un autre côté de la cabine (11) par rapport au siège conducteur (112), le plancher (111) présentant des points de fixation d'origine (2) d'un siège passager au niveau de l'emplacement passager (113) ;
- une douche (3), la douche (3) comprenant un bac receveur (31) de douche.

## Description

### Domaine Technique

Le domaine de l'invention est celui de la conception et de la fabrication d'équipements de camions routiers.

L'invention concerne plus particulièrement une solution visant à permettre à l'utilisateur d'un camion routier de se doucher au sein même de la cabine de son camion.

### État de la technique

Les conducteurs de camions routiers peuvent être amenés à réaliser des trajets sur plusieurs jours d'affilés.

Les conducteurs de poids lourd doivent conduire, travailler, se reposer, et dormir dans la cabine de leur véhicule.

Il est ainsi recherché à améliorer le confort disponible dans ces cabines.

La possibilité de prendre librement une douche est un type de confort recherché. En effet, il n'est pas toujours possible, ou désiré, pour un conducteur ou une conductrice de trouver un lieu disposant de douches publiques.

Certains camions routiers, disposant de cabines particulièrement grandes, sont conçues avec douches intégrées. Toutefois, ces camions ne sont pas communs et impliquent des modifications importantes.

Il est également recherché à ce que l'implémentation d'une telle fonction de confort ne fasse pas au détriment d'une autre fonction, ou à tout le moins que cette intégration limite son impact sur les autres fonctions.

Dans le domaine de l'invention, il est également connu le document de brevet publié sous le numéro EP 1 900 617 A1 qui décrit des aménagements de cabines de camion routier.

### Problème technique

L'invention a notamment pour objectif de pallier ces inconvénients de l'art antérieur.

Plus précisément, l'invention a pour objectif de proposer une solution visant à permettre à un conducteur de prendre aisément une douche dans son camion routier.

L'invention a également pour objectif de fournir une telle solution qui peut être mise en oeuvre dans un camion routier dont la cabine présente des dimensions plus modestes que celles des camions routiers évoqués précédemment.

L'invention a encore pour objet de fournir une telle solution qui évite de grever d'autres fonctions du camion routier ou à tout le moins qui limite son impact sur ces autres fonctions.

### Résumé de l'invention

Ces objectifs, ainsi que d'autres qui apparaîtront par la suite, sont atteints grâce à l'invention qui a pour objet un camion routier comprenant une cabine, la cabine comprenant :
- un plancher ;
- un siège conducteur situé d'un côté de la cabine ;
- un emplacement passager situé d'un autre côté de la cabine par rapport au siège conducteur, le plancher présentant des points de fixation d'origine d'un siège passager au niveau de l'emplacement passager ;
- une douche, la douche comprenant un bac receveur de douche ;
caractérisé en ce que le bac receveur de douche est positionné sur l'emplacement passager, la douche comprenant :
- une interface de fixation couplée sur au moins une partie des points de fixation d'origine, le bac receveur de douche étant fixé sur l'interface de fixation ;
- un support intermédiaire couplé au bac receveur de douche, le support intermédiaire présentant sur une face supérieure des seconds points de fixation présentant une répartition et des espacements les uns par rapport aux autres identiques à ceux d'au moins une partie des points de fixation d'origine, les seconds points de fixation du support intermédiaire étant destinés à permettre le couplage d'un strapontin amovible.

Grâce à cette solution, un camion routier ne présentant pas une grande cabine peut disposer d'une douche pour le confort du conducteur.

Cette conception du camion routier permet également de limiter les efforts nécessaires à l'intégration de la douche dans la cabine. En effet, la cabine se fixe à l'emplacement et sur les points de fixation d'origine d'un siège passager.

Dans l'éventualité où le transport d'un passager serait nécessaire, un strapontin peut être fixé dans le bac receveur de douche grâce au support intermédiaire. Grâce à la disposition des seconds points de fixation du support intermédiaire, le strapontin utilisé peut notamment être celui d'origine du camion routier s'il en disposait d'un sur l'emplacement passager.

Selon un mode de réalisation préféré, la douche comprend une paroi arrière s'étendant en hauteur depuis un rebord arrière du bac receveur de douche, la paroi arrière étant au niveau ou en retrait d'un dossier du siège conducteur le long d'un axe longitudinal avant/arrière de la cabine, la douche étant ouverte en avant et latéralement.

Grâce à ce mode de réalisation, l'intégration de la douche dans l'emplacement passager ne gêne pas le champ de vision du conducteur quand il conduit son camion routier. En effet, la douche ne présente alors pas de parois fixe susceptible de l'empêcher de regarder le rétroviseur latéral situé derrière la douche par rapport au siège conducteur.

Selon une caractéristique préférée, la douche comprend une tringle et un rideau de douche monté mobile sur la tringle, et destiné à refermer latéralement et en avant la douche.

La douche peut alors être refermée lorsqu'elle est utilisée, en limitant les risques de projection d'eau en dehors de la douche, et ouverte lorsque le camion routier est conduit.

Selon une caractéristique avantageuse, la douche comprend un caillebotis amovible surmontant le bac receveur et recouvrant le support intermédiaire, l'eau de la douche étant destinée à s'écouler au travers du caillebotis amovible dans une position installée du caillebotis amovible sur le bac receveur.

Le caillebotis forme une surface qualitative sur laquelle se positionne une personne souhaitant utiliser la douche. Quand l'usage du strapontin est nécessaire, il suffit de retirer le caillebotis afin de pouvoir accéder au support intermédiaire, et de fixer le strapontin sur les seconds points de fixation du support intermédiaire.

Selon un mode de réalisation avantageux, la cabine est montée basculante sur un châssis du camion routier entre une position basculée et une position non-basculée, le châssis intégrant une réserve d'eau, la douche comprenant des moyens d'aspersion raccordés fluidiquement à la réserve d'eau au moins dans la position non-basculée de la cabine.

Grâce à ce mode de réalisation, le poids supplémentaire d'une réserve d'eau n'est pas porté par la cabine ce qui pourrait être préjudiciable vis-à-vis des certaines caractéristiques et/ou fonctionnalités de la cabine.

Préférentiellement, le camion routier comprend une tuyauterie d'évacuation de la douche à la réserve d'eau, la tuyauterie d'évacuation comprenant un raccord emmanchable présentant une partie femelle et une partie mâle désolidarisée l'une de l'autre dans la position basculée de la cabine, un passage de la cabine de sa position basculée à sa position non-basculée entraînant un emmanchement de la partie mâle dans la partie femelle.

Ceci permet d'optimiser la forme de la tuyauterie d'évacuation afin de limiter sa longueur et de respecter une pente descendante pour cette tuyauterie en direction de la réserve d'eau, lorsque la cabine est dans sa position non-basculée.

### Brève description des dessins

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique d'un camion routier selon l'invention vu de dessus ;
- la figure 2 est une représentation schématique de côté d'une cabine d'un camion routier selon l'invention ;
- la figure 3 est une représentation schématique en perspective d'une douche du camion routier selon l'invention ;
- la figure 4 est une représentation schématique d'un emplacement passager d'un plancher de la cabine du camion routier ;
- la figure 5 est une représentation schématique d'une interface de fixation d'un bac receveur de douche de la douche ;
- la figure 6 est une représentation schématique en perspective du bac receveur ;
- la figure 7 est une représentation schématique du dessous d'un strapontin du véhicule routier ;
- la figure 8 est une représentation schématique illustrant le basculement de la cabine.

### Description détaillée

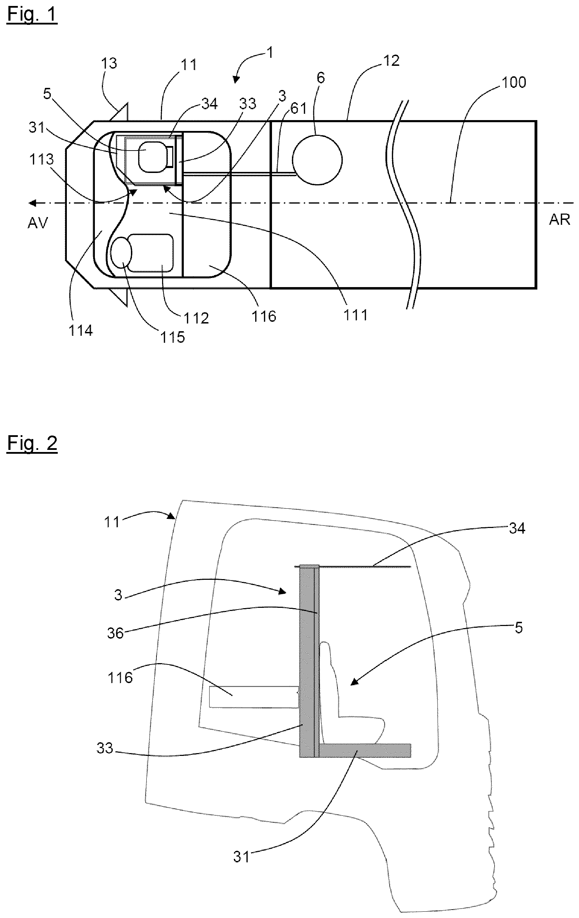

Tel que cela est visible sur la figure 1, un camion routier 1 selon l'invention est représenté.

Le camion routier 1 comprend :
- une cabine 11 ;
- un châssis 12 ;
- des rétroviseurs 13 situés de part et d'autre de la cabine 11.

Le camion routier 1 s'étend longitudinalement le long d'un axe longitudinal avant/arrière 100 avec une orientation arrière AR / avant AV, la cabine 11 étant située vers l'avant AV du camion routier 1.

La cabine comprend un siège conducteur 112 situé d'un côté de la cabine 11, et un emplacement passager 113 situé d'un autre côté de la cabine 11.

Selon le présent mode de réalisation, le siège conducteur 112 est situé à gauche dans la cabine 11 tandis que l'emplacement passager 113 est situé à droite.

La cabine 11 comprend également une planche de bord 114, un volant 115 situé devant le siège conducteur 112, et une couchette 116 s'étendant transversalement à l'axe longitudinal avant/arrière 100, derrière le siège conducteur 112 et l'emplacement passager 113.

En référence aux figures 1, 2 et 4, l'emplacement passager 113 correspond à une partie du plancher 111 sur lequel est habituellement situé un siège passager, ou un strapontin. Tel que cela est détaillé par la suite, le camion routier 1 comprend notamment un strapontin 5 amovible.

Le plancher 111 présente des points de fixation d'origine 2 d'un siège passager au niveau de cet emplacement passager 113.

Ces points de fixation d'origine 2 comprennent :
- un ensemble principal 21 comprenant quatre trous alignés, et deux trous adjacents ;
- un ensemble secondaire 22 comprenant deux trous espacés de l'ensemble principal 21.

Ces points de fixation d'origine 2 peuvent par exemple être des trous taraudés, ou des trous derrière lesquels des écrous sont fixés. De cette manière, un équipement peut être fixé sur ces trous à l'aide de boulons.

En référence aux figures 1 à 3, le camion routier 1 comprend également une douche 3.

Cette douche 3 comprend un bac receveur 31 de douche.

L'eau de la douche 3 est destiné à être collectée par ce bac receveur 31 pour être évacuée.

Ce bac receveur 31 de douche est positionné sur l'emplacement passager 113.

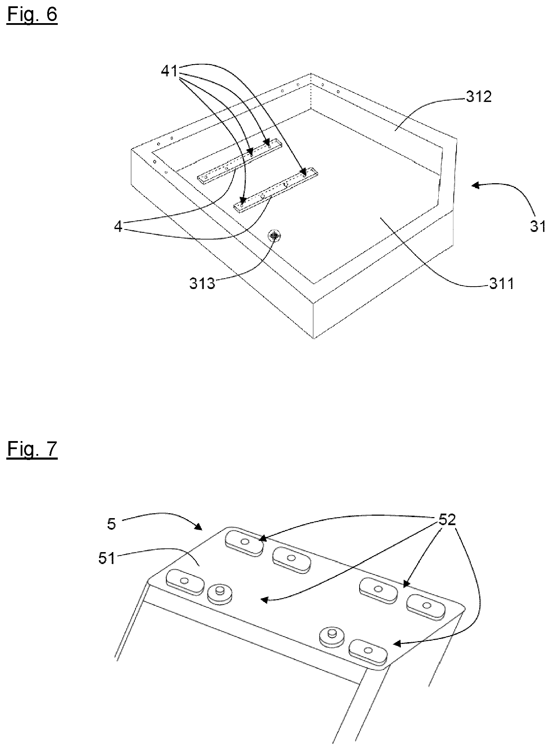

Tel qu'illustré par la figure 6, le bac receveur 31 présente un fond 311, et un rebord périphérique 312 s'étendant en hauteur depuis le pourtour du fond 311. Le bac receveur 31 présente également un orifice d'évacuation 313 dans lequel prend place une bonde.

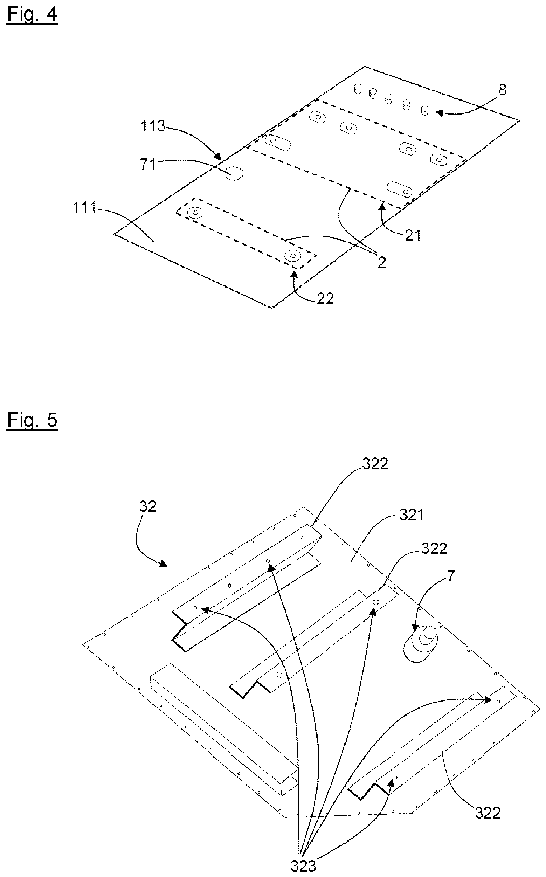

En référence à la figure 5, la douche 3 comprend également, une interface de fixation 32.

Le bac receveur 31 de douche est fixé sur l'interface de fixation 32.

Cette interface de fixation 32, représentée vue de dessous sur la figure 5, est conçue pour être couplée sur au moins une partie des points de fixation d'origine 2. Et plus précisément sur les points de fixation d'origine 2 de l'ensemble principal 21 et de l'ensemble secondaire 22.

L'interface de fixation 32 présente, selon le présent mode de réalisation, une plaque 321, et des profilés de fixation 322 couplés sur la face inférieure de la plaque 321.

Les profilés de fixation 322 s'étendent perpendiculairement à la plaque 321 puis présente un plat orienté parallèlement à la plaque 321. Ces plats sont destinés à reposer sur le plancher 111.

Les plats présentent des trous traversants 323 permettant le boulonnage des profilés de fixation, et ainsi de l'interface de fixation 32 sur les points de fixation d'origine 2.

En effet, les trous traversants 323 des plats de l'interface de fixation 32 présentent une répartition et des espacements les uns par rapport aux autres identiques à ceux des points de fixation d'origine 2, et notamment des trous de l'ensemble principal 21 et de l'ensemble secondaire 22.

Tel qu'illustré sur la figure 6, la douche 3 comprend également un support intermédiaire 4 couplé au bac receveur 31 de douche.

Ce support intermédiaire 4 est plus spécifiquement couplé sur le fond 311 du bac receveur 31. Le support intermédiaire 4 est notamment formé par deux plats, par exemple en acier inoxydable.

Le support intermédiaire 4 présente sur une face supérieure des seconds points de fixation 41 destinés à permettre la fixation du strapontin 5 amovible évoqué précédemment.

Les seconds points de fixation 41 sont conçus de manière à présenter une répartition et des espacements les uns par rapport aux autres identiques à ceux d'au moins une partie des points de fixation d'origine 2. Plus précisément, les seconds points de fixation 41 présentent une répartition et des espacements les uns par rapport aux autres identiques à la répartition et aux espacements des trous de l'ensemble principal 21 des points de fixation d'origine 2.

Le strapontin 5 amovible peut ainsi être fixé sur ces seconds points de fixation 41 du support intermédiaire 4.

En effet, tel qu'illustré sur la figure 7 qui représente la face inférieure 51 du strapontin 5, le strapontin 5 présente des couplages 52 conçus pour se coupler sur l'ensemble principal 21 des points de fixation d'origine 2.

En conséquence, les couplages 52 du strapontin 5 amovible peuvent également être utilisés pour permettre la fixation du strapontin 5 amovible sur les seconds points de fixation 41 du support intermédiaire 4.

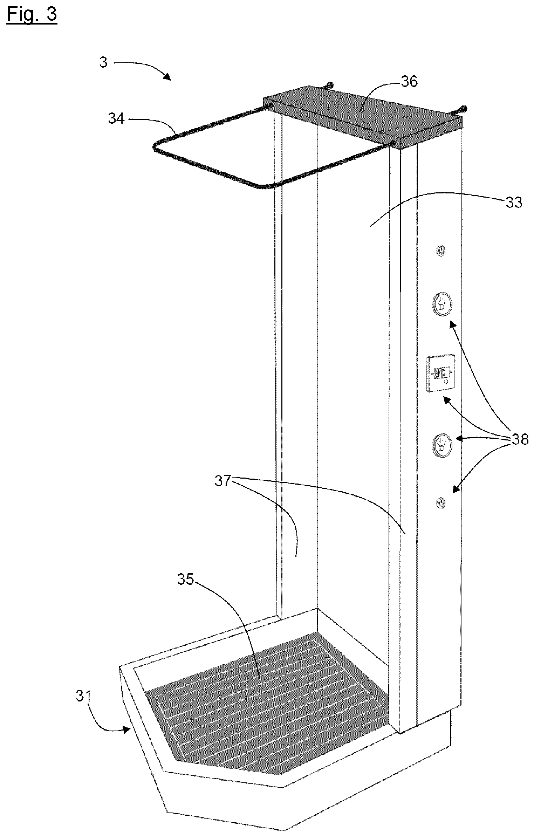

En référence à la figure 3, la douche 3 comprend également une paroi arrière 33 qui s'étend en hauteur depuis un rebord arrière du bac receveur 31 de douche.

La paroi arrière 33 s'étend transversalement, et plus spécifiquement orthogonalement, par rapport au fond 311 du bac receveur 31.

En référence aux figures 1 et 2, la paroi arrière 33 s'étend au niveau ou en retrait d'un dossier du siège conducteur 112 le long de l'axe longitudinal avant/arrière 100 de la cabine.

De nouveau en référence à la figure 3, la paroi arrière 33 s'étend jusqu'à un plafond 36 qui présente des dimensions réduites par rapport aux dimensions du bac receveur 31.

La douche 3 comprend également deux joues 37 de largeur restreinte qui s'étendent de part et d'autre de la paroi arrière 33. Ces joues 37 forment transversalement un U avec la paroi arrière 33.

Les joues 37 s'étendent également au niveau ou en retrait du dossier du siège conducteur 112 le long de l'axe longitudinal avant/arrière 100 de la cabine.

De cette manière, la douche 3 est ouverte en avant et latéralement.

En d'autres termes, à partir du niveau du dossier du siège conducteur 112, le long de l'axe longitudinal avant/arrière 100 de la cabine, la douche 3 ne présente pas d'autres parois latérales et/ou avant qui seraient susceptibles d'être situées dans le champ de vision d'un conducteur qui serait positionné sur son siège conducteur 112.

Cette configuration permet à un conducteur de pouvoir contrôler son rétroviseur 13 situé derrière la douche 3.

La douche comprend également une tringle 34 et un rideau de douche monté mobile sur la tringle 34, et destiné à refermer latéralement et en avant la douche 3. Cette tringle 34 prend la forme d'un U et s'étend depuis le plafond 36 de la douche 3. La tringle 34 s'étend en avant jusqu'à surplomber une partie avant du bac receveur 31.

Lorsque le camion routier 1 est à l'arrêt, la douche 3 peut ainsi être refermée à l'aide du rideau de douche pour éviter des projections d'eau à l'extérieur de la douche 3.

Tel que cela est visible sur la figure 3, la douche 3 comprend également une interface de contrôle 38 par laquelle un utilisateur peut vérifier des paramètres de la douche 3, par exemple la pression d'eau et la température de l'eau, et commander la douche 3, par exemple pour déclencher l'aspersion et le déclenchement d'une ventilation mécanique de la cabine 11.

La douche 3 comprend enfin un caillebotis amovible 35, au travers duquel l'eau de la douche est destinée à s'écouler pour atteindre le fond 311 du bac receveur et y être collectée.

Ce caillebotis amovible 35 surmonte le fond 311 du bac receveur 31. Le caillebotis amovible 35 présente plus spécifiquement une forme à l'empreinte du rebord périphérique 312 du bac receveur 31. Le caillebotis amovible 35 peut ainsi être inséré dans le bac receveur 31 et y être calé par le rebord périphérique 32, lors de l'utilisation de la douche 3.

Quand le caillebotis amovible 35 est installé dans le bac receveur 31, il recouvre alors le support intermédiaire 4, et permet l'utilisation de la douche 3 sans que l'utilisateur ne risque de se blesser sur le support intermédiaire 4.

Quand l'usage du strapontin 5 amovible est nécessaire, le caillebotis amovible 35 doit être retiré pour permettre la fixation du strapontin 5 sur le support intermédiaire 4.

En référence à la figure 1, le châssis 12 du camion routier 1 intègre une réserve d'eau 6.

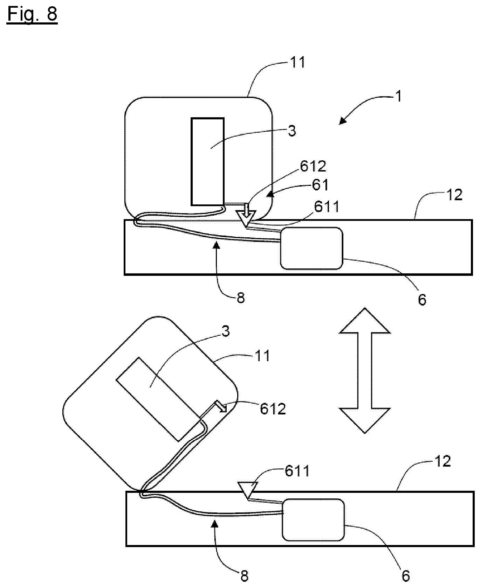

Cette réserve d'eau 6 comprend deux parties dont une première partie pour de l'eau destinée à alimenter la douche 3, et une seconde partie pour des eaux grises collectées par le bac receveur 31. A cet effet, la douche 3 comprend des moyens d'aspersion destinés à être alimentés par l'eau de la première partie de la réserve d'eau 6. Une alimentation souple 8 parcourt le châssis 12 depuis la réserve d'eau 6 et remonte dans la cabine 1 jusqu'à la douche 3, tel que cela est illustré sur la figure 8.

Ces deux parties peuvent par exemple être formées par des sacs souples pour permettre de minimiser le volume occupé par la réserve d'eau 6, la seconde partie étant vide quand la première partie est pleine, et inversement.

En référence à la figure 4, des passages de connectiques 8 d'approvisionnement en électricité, en eau, et de contrôle sont représentés traversant le plancher 111. L'alimentation souple 8 passe notamment par au moins l'un des passages de connectiques 8.

Tel qu'illustré sur les figures 1 et 8, le camion routier 1 comprend également une tuyauterie d'évacuation 61 de la douche 3 à la réserve d'eau. Cette tuyauterie d'évacuation 61 s'étend depuis un siphon 7 (visible sur la figure 5), qui passe au travers d'un trou 71 ménagé dans le plancher 111 (visible sur la figure 4), jusqu'à la réserve d'eau 6 dans le châssis 12.

Selon le présent mode de réalisation, et tel que représenté sur la figure 8, la cabine 11 est montée basculante sur le châssis 12 du camion routier 1 entre une position basculée (représentée en bas de la figure 8) et une position non-basculée (représentée en haut de la figure 8).

L'alimentation souple 8 est formée par un tube flexible qui autorise des torsions. De cette manière, l'alimentation souple peut parcourir le châssis et remonter dans la cabine 11 au niveau de l'axe de basculement de la cabine 11 sur le châssis 12. Les moyens d'aspersion sont ainsi raccordés fluidiquement à la réserve d'eau 6 dans toutes les positions de la cabine 11.

Toutefois, pour la tuyauterie d'évacuation 61, il est recherché à éviter le maintien d'une garde d'eau dans la tuyauterie d'évacuation 61 après l'évacuation d'une eau collectée. En conséquence, la tuyauterie d'évacuation 61 tend à toujours présenter une pente en direction de la réserve d'eau 6.

Selon le présent mode de réalisation, la tuyauterie d'évacuation 61 comprend un raccord emmanchable présentant une partie femelle 611 et une partie mâle 612 désolidarisée l'une de l'autre dans la position basculée de la cabine 11, un passage de la cabine 11 de sa position basculée à sa position non-basculée entraînant un emmanchement de la partie mâle 612 dans la partie femelle 611.

La partie femelle 611 assume par exemple une forme d'entonnoir orienté pour présenter une ouverture évasée vers le haut, et la partie mâle 612 présente un embout flexible, par exemple en silicone, apte à être guidé par l'ouverture évasée de la partie femelle 611, lors de l'approche finale de la cabine 11 vers le châssis 12, et à s'emmancher dans la partie femelle 611 lorsque la cabine est complétement rabattue sur le châssis 12.

Le véhicule routier 1 précédemment décrit forme une solution qui permet à son conducteur de prendre aisément une douche au sein même de son camion routier. Cette solution peut être mise en œuvre aisément dans un camion routier préexistant, dont la cabine présente des dimensions modestes. En effet, la douche vient remplacer le siège passager, tout en permettant l'emport d'un passager à l'aide du strapontin. L'intégration de la douche 3 est simplifiée grâce à l'utilisation des points de fixation d'origine présenté par le camion routier ce qui évite d'avoir à réaliser de nouveaux points de fixation dans le plancher 111 du camion routier.

## Revendications

1. Camion routier (1) comprenant une cabine (11), la cabine (11) comprenant :
- un plancher (111) ;
- un siège conducteur (112) situé d'un côté de la cabine (11) ;
- un emplacement passager (113) situé d'un autre côté de la cabine (11) par rapport au siège conducteur (112), le plancher (111) présentant des points de fixation d'origine (2) d'un siège passager au niveau de l'emplacement passager (113) ;
- une douche (3), la douche (3) comprenant un bac receveur (31) de douche ;
**caractérisé en ce que** le bac receveur (31) de douche est positionné sur l'emplacement passager (113), la douche (3) comprenant :
- une interface de fixation (32) couplée sur au moins une partie des points de fixation d'origine (2), le bac receveur (31) de douche étant fixé sur l'interface de fixation (32) ;
- un support intermédiaire (4) couplé au bac receveur (31) de douche, le support intermédiaire (4) présentant sur une face supérieure des seconds points de fixation (41) présentant une répartition et des espacements les uns par rapport aux autres identiques à ceux d'au moins une partie des points de fixation d'origine (2), les seconds points de fixation (41) du support intermédiaire (4) étant destinés à permettre le couplage d'un strapontin (5) amovible.

2. Camion routier (1) selon la revendication précédente, **caractérisé en ce que** la douche (3) comprend une paroi arrière (33) s'étendant en hauteur depuis un rebord arrière du bac receveur (31) de douche, la paroi arrière (33) étant au niveau ou en retrait d'un dossier du siège conducteur (112) le long d'un axe longitudinal avant/arrière (100) de la cabine, la douche (3) étant ouverte en avant et latéralement.

3. Camion routier (1) selon la revendication précédente, **caractérisé en ce que** la douche (3) comprend une tringle (34) et un rideau de douche monté mobile sur la tringle, et destiné à refermer latéralement et en avant la douche.

4. Camion routier (1) selon l'une quelconque des revendications précédentes, **caractérisé en ce que** la douche (3) comprend un caillebotis amovible (35) surmontant le bac receveur (31) et recouvrant le support intermédiaire (4), l'eau de la douche étant destinée à s'écouler au travers du caillebotis amovible (35) dans une position installée du caillebotis amovible (35) sur le bac receveur (31).

5. Camion routier (1) selon l'une quelconque des revendications précédentes, **caractérisé en ce que** la cabine (11) est montée basculante sur un châssis (12) du camion routier (1) entre une position basculée et une position non-basculée, le châssis (12) intégrant une réserve d'eau, la douche (3) comprenant des moyens d'aspersion raccordés fluidiquement à la réserve d'eau au moins dans la position non-basculée de la cabine (11).

6. Camion routier (1) selon la revendication précédente, **caractérisé en ce qu'**il comprend une tuyauterie d'évacuation de la douche (3) à la réserve d'eau, la tuyauterie d'évacuation comprenant un raccord emmanchable présentant une partie femelle et une partie mâle désolidarisée l'une de l'autre dans la position basculée de la cabine (11), un passage de la cabine (11) de sa position basculée à sa position non-basculée entraînant un emmanchement de la partie mâle dans la partie femelle.
